# EUROPEAN PATENT APPLICATION

(11) **EP 1 758 193 A1**
(43) Date of publication of application: **28.02.2007**
(21) Application number: 06016732.7
(22) Date of filing: 10.08.2006
(51) Int. Cl.: H01M 8/04, H02M 7/00, H01M 8/06

(54) **Fuel cell with water-cooled power converter**

(30) Priority: 22.08.2005 KR 20050077000
(71) Applicant: LG Electronics Inc., Yongdungpo-gu Seoul (KR); LG Chem, Ltd., Yongdungpo-Gu Seoul (KR)
(72) Inventor: Kim, Tae-Won, Anyang Gyeonggi-Do (KR); Choi, Hong, Manan-Gu Anyang Gyeonggi-Do (KR)
(74) Representative: TER MEER - STEINMEISTER & PARTNER GbR

(57) **Abstract**

A fuel cell having a water type radiating device comprising a fuel supply unit for supplying a certain rate of fuel, a reformer for generating a hydrogen containing gas containing a hydrogen gas by receiving the fuel from the fuel supply unit, a stack unit for generating an electricity and heat according to an electrochemical reaction between the hydrogen containing gas generated from the reformer and oxygen separately supplied a water tank connected to one side of the stack unit for heating water contained therein by use of the heat generated from the stack unit, a power converter connected to one side of the stack unit for converting the electricity generated from the stack unit into an alternating current and having a plurality of radiating plates, and a forcible radiating unit for forcibly cooling the radiating plates and for heating the water contained in the water tank.

## Description

### BACKGROUND OF THE INVENTION

### 1. Field of the Invention

The present invention relates to a fuel cell having a water type radiating device, and particularly, to a fuel cell having a water type radiating device which is capable of heating water stored in a water tank (or water container) inside a fuel cell by collecting (retrieving) heat radiated out of the fuel cell through a radiating plate, and of improving a radiation effect by employing a water type radiation structure.

### 2. Background of the Invention

Thermal power or water power generated from power plants is used to generate electric power used in buildings in recent times. The electric energy generated from the power plants is supplied to buildings (e.g., each house) located in each region through a power transmission line, and the supplied electric energy is used to operate TV sets, refrigeration, air conditioners, and the like, resulting in a convenient living.

However, in order to obtain the electric energy being used, oil or coal is burned in the power plant to generate thermal energy which is then converted into the electric energy, which accordingly brings a considerably low efficiency for the generation of electric power as compared to fuel energy used. In addition, while supplying the electric energy generated from the power plant via a power transmission line to buildings in each region, a great energy loss occurs to thereby lower the efficiency of the electric energy used in each building as compared to the consumption of the fuel energy. That is, the electric energy used in each building is obtained by consuming an excessively great amount of fuel energy. Furthermore, the burning of the great amount of fuel energy such as the oil or coal generates contaminated materials to thus cause an environmental pollution.

Accordingly, in recent times, a fuel cell is being developed such that an excellent energy efficiency can be provided and environment-friendly electric energy can be generated. Such the fuel cell refers to a device for directly converting chemical energy contained in the fuel into the electric energy by virtue of an electrochemical reaction between a fuel sequentially supplied from the exterior and air.

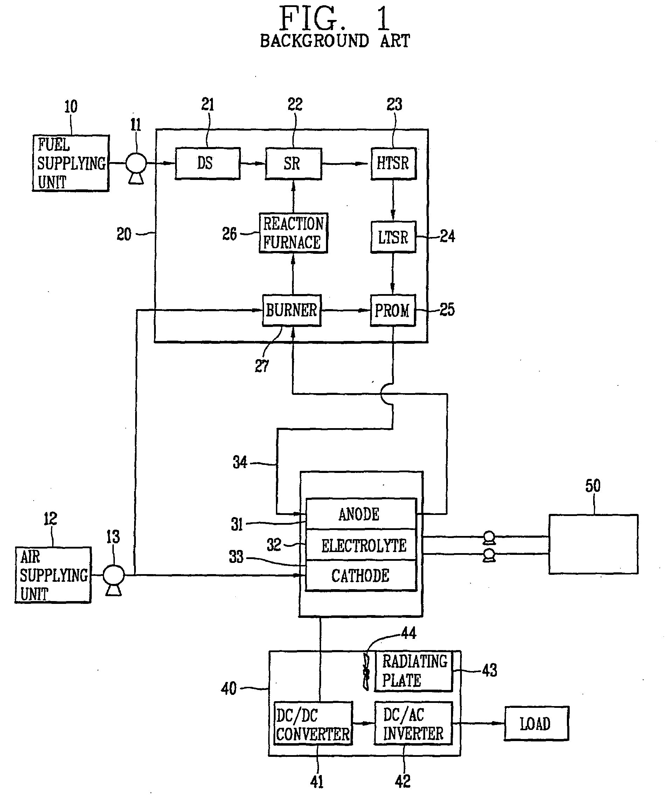

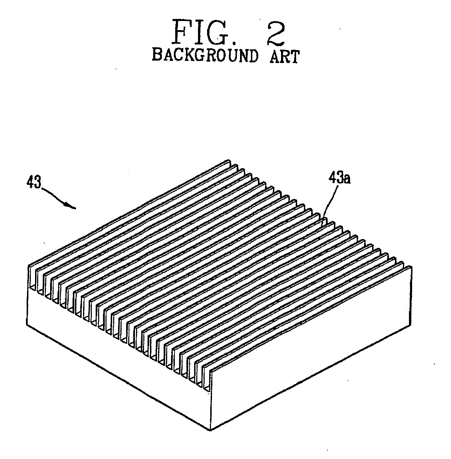

Fig. 1 is a schematic view showing a structure of a related art fuel cell having a radiating device, and Fig. 2 is a perspective view showing a structure of a radiating plate of Fig. 1.

As shown in the drawings, a related art fuel cell includes a fuel supply unit 10 for supplying a certain amount of fuel, a reformer 20 for generating a hydrogen containing gas containing a hydrogen gas and heat by receiving the fuel from the fuel supply unit 10, a stack unit 30 for generating an electricity and heat according to an electrochemical reaction between the hydrogen gas generated from the reformer 20 and oxygen separately supplied, a power converter 40 for converting the electricity generated from the stack unit 30 into an Alternating Current (AC), and a water tank (or water container) 50 for supplying hot water by use of the heat generated from the stack unit 30.

The reformer 20 includes a desulfurization reactor DS 21 for introducing the fuel supplied from the fuel supply unit 10, water and air to thus remove sulfur contained in the fuel, a steam reformer SR 22 for reacting the fuel with steam, a high temperature steam reactor HTS 23 for reacting carbon monoxide with steam, a low temperature steam reactor LTS 24 for converting the carbon monoxide into carbon dioxide, a partial oxidation reactor PRO 25 for converting non-oxidized carbon monoxide into carbon dioxide, a reaction furnace 26 for generating hydrogen from the fuel by a reforming process and a hydrogen refining process, and a burner 27 for supplying heat required to the reaction furnace 26 by being contact-coupled to the reaction furnace 26.

The stack unit 30 is implemented by stacking a plurality of unit cells, and includes an anode 31, an electrolyte film 32, and a cathode 33.

The power converter 40 refers to a device for converting a Direct Current (DC) generated from the stack unit 30 into an AC which can be used in the houses. The power converter 40 is provided with a plurality of devices (not shown) therein for operating a converter 41 and an inverter 42. Each device is coupled to a radiating plate so as to radiate heat generated therefrom to the exterior.

A plurality of radiating pins 43a having a certain length upwardly along a thickness direction of the radiating plate 43 are disposed at an upper end surface of the radiating plate 43 to thus fast perform the radiation of the radiating plate 43 by increasing a contact area between the radiating plate 43 and air. A radiating fan 44 is disposed at one side of the radiating plate 43 to thus cool the radiating plate 43.

A connection line 60 through which water within the water tank 50 flows in and flows out connects a lower end portion of the stack unit 30 and a lower end portion of the water tank 50 to thus enable a heating of the water contained in the water tank 50 by use of the heat generated from the stack unit 30. By connecting the connection line 60 to the lower end portion of the water tank 50, relatively cold water is positioned at a lower side of the water tank 50 and relatively hot water is positioned at the upper side thereof according to a convection of the water, thereby reducing a time taken by heating the water.

However, regarding the related art fuel cell, the heat generated from the power converter 40 is discharged out of the power converter 40 by using the radiating pins 43a and the radiating fan 44 of the radiating plate 43. Here, an air cooling method used in the radiating plate 43 does not provide a fast cooling effect. In addition, the heat generated from the power converter 40 is not collected but discharged outside, which results in an inefficient usage of energy.

### SUMMARY OF THE INVENTION

Therefore, an object of the present invention is to provide a fuel cell having a water type radiating device which is capable of heating water stored in a water tank (or water container) inside a fuel cell by collecting (retrieving) heat radiated out of the fuel cell through a radiating plate, and of improving a radiation effect by employing a water type radiation structure.

To achieve these and other advantages and in accordance with the purpose of the present invention, as embodied and broadly described herein, there is provided a fuel cell having a water type radiating device comprising a fuel supply unit for supplying a certain rate of fuel, a reformer for generating a hydrogen containing gas containing a hydrogen gas by receiving the fuel from the fuel supply unit, a stack unit for generating an electricity and heat according to an electrochemical reaction between the hydrogen containing gas generated from the reformer and oxygen separately supplied, a water tank connected to one side of the stack unit for heating water contained therein by use of the heat generated from the stack unit, a power converter connected to one side of the stack unit for converting the electricity generated from the stack unit into an alternating current and having a plurality of radiating plates, and a forcible radiating unit for forcibly cooling the radiating plates and for heating the water contained in the water tank.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a schematic view showing a structure of a related art fuel cell having a radiating device;
Fig. 2 is a perspective view showing a structure of a radiating plate of Fig. 1;
Fig. 3 is a schematic view showing a structure of a fuel cell having a radiating device in accordance with one embodiment of the present invention; and
Fig. 4 is a perspective view showing a radiating plate of Fig. 3.

### DETAILED DESCRIPTION OF THE INVENTION

Description will now be given in detail of the present invention, with reference to the accompanying drawings.

The present invention provides a fuel cell having a water type radiating device comprising a fuel supply unit for supplying a certain rate of fuel, a reformer for generating a hydrogen containing gas containing a hydrogen gas by receiving the fuel from the fuel supply unit, a stack unit for generating an electricity and heat according to an electrochemical reaction between the hydrogen containing gas generated from the reformer and oxygen separately supplied, a water tank connected to one side of the stack unit for heating water contained therein by use of the heat generated from the stack unit, a power converter connected to one side of the stack unit for converting the electricity generated from the stack unit into an alternating current and having a plurality of radiating plates, and a forcible radiating unit for forcibly cooling the radiating plates and for heating the water contained in the water tank.

Hereinafter, the present invention will be explained in detail with reference to the attached drawings.

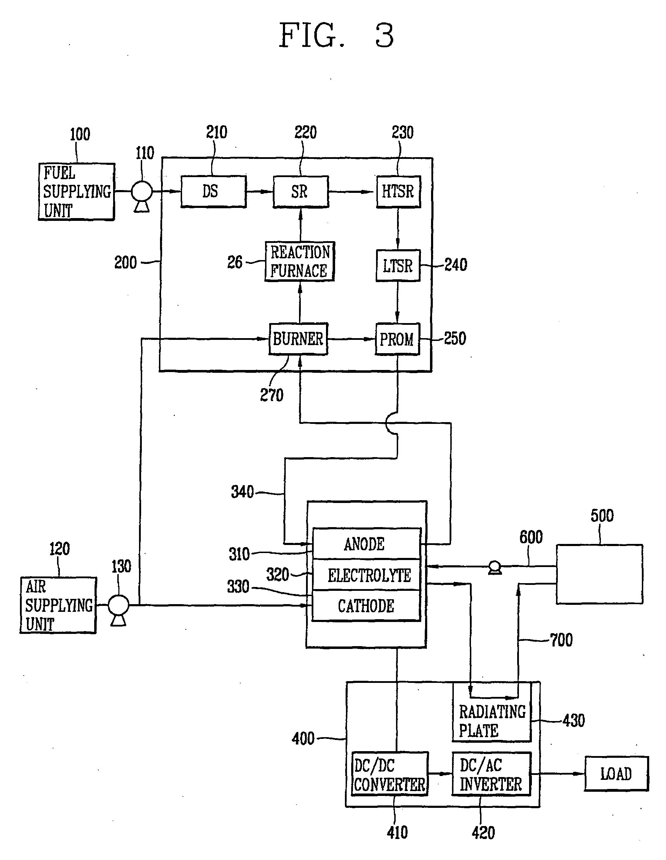

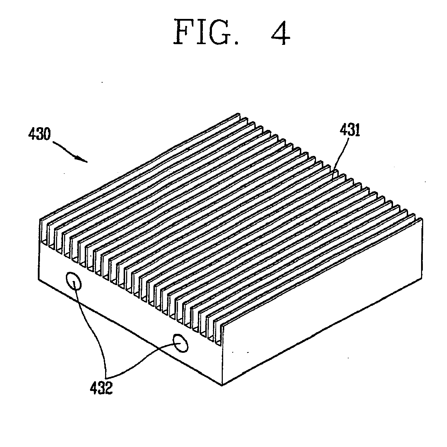

Fig. 3 is a schematic view showing a structure of a fuel cell having a radiating device in accordance with one embodiment of the present invention, and Fig. 4 is a perspective view showing a radiating plate of Fig. 3.

As shown in the drawings, a fuel cell having a water type radiating device in accordance with an embodiment of the present invention includes a fuel supply unit 100 for supplying a certain rate of fuel, a reformer 200 for generating a hydrogen containing gas containing a hydrogen gas by receiving the fuel from the fuel supply unit 100, a stack unit 300 for generating an electricity and heat according to an electrochemical reaction between the hydrogen containing gas generated from the reformer 200 and oxygen separately supplied, a water tank 500 connected to one side of the stack unit 300 for heating water contained therein by use of the heat generated from the stack unit 300, a power converter 400 connected to one side of the stack unit 300 for converting the electricity generated from the stack unit 300 into an alternating current and having a plurality of radiating plates 430, and a forcible radiating unit for forcibly cooling the radiating plates 430 and for heating the water contained in the water tank 500.

The reformer 200 includes a desulfurization reactor DS 210 for introducing the fuel supplied from the fuel supply unit 100, water and air to thus remove sulfur contained in the fuel, a steam reformer SR 220 for reacting the fuel with steam, a high temperature steam reactor HTS 230 for reacting carbon monoxide with steam, a low temperature steam reactor LTS 240 for converting the carbon monoxide into carbon dioxide, a partial oxidation reactor PRO 250 for converting non-oxidized carbon monoxide into carbon dioxide, a reaction furnace 260 for generating hydrogen from the fuel by a reforming process and a hydrogen refining process, and a burner 270 for supplying heat required to the reaction furnace 260 by being contact-coupled to the reaction furnace 260.

The stack unit 300 is implemented by stacking a plurality of unit cells, and includes an anode 310, an electrolyte film 320, and a cathode 330.

The power converter 400 refers to a device for converting a Direct Current (DC) generated from the stack unit 300 into an AC which can be used in the houses. The power converter 400 is provided with a plurality of devices (not shown) therein for operating a converter 410 and an inverter 420. Each device is coupled to a radiating plate 430 so as to radiate heat generated therefrom to the exterior.

A plurality of radiating pins 431 having a certain length upwardly along a thickness direction of the radiating plate 430 are disposed at an upper end surface of the radiating plate 43 to thus fast perform the radiation of the radiating plate 430 by increasing a contact area between the radiating plate 430 and air. A plurality of insertion holes 432 are formed through one side of the radiating plate 430 to thus be coupled to a divergence pipe 700 which is to be explained later in a manner of an insertion.

A connection line 600 through which water within the water tank 500 flows in and flows out is installed at a lower end portion of the stack unit 300 and a lower end portion of the water tank 500 to thus enable a heating of the water contained in the water tank 500 by use of the heat generated from the stack unit 300. By connecting the connection line 600 to the lower end portion of the water tank 500, relatively cold water is positioned at a lower side of the water tank 500 and relatively hot water is positioned at the upper side thereof according to a convection of the water, thereby reducing a time taken by heating the water.

The forcible radiating unit refers to the divergence pipe 700 which is diverged from the connection line 600 which connects the stack unit 300 and the water tank 500 and then merged with the connection line 600 via the radiating plates 430 in order to be in contact with the radiating plates 430. The divergence pipe 700 is inserted into the insertion holes 432 of the radiating plates 430 to be in contact with the radiating plates 430, and then connected to one side of the connection line 600 to allow water within the water tank to flow therethrough. Also, the forcible radiating unit may be passed through the radiating plates 430 in a manner of a zigzag shape.

In the fuel cell having the forcible radiating unit in accordance with the embodiment of the present invention having such construction, when the fuel supply unit 100 supplies to the reformer 200 water and fuel (e.g., methanol, liquefied natural gas (i.e., LNG), gasoline, or the like), a steam reforming and a partial oxidation are compositively executed in the reformer 200, thereby generating a hydrogen containing gas which contains a hydrogen gas, reaction heat, and water.

In the stack unit 300 having received the hydrogen containing gas, a hydrogen gas H₂ is supplied to a side of the anode 310 to generate an electrochemical oxidation reaction. Then, the hydrogen gas H₂ is ionized into a hydrogen ion H+ and an electron e- to thus be oxidized. The ionized hydrogen ion H+ is moved toward the cathode 330 via the electrolyte film 320 and the electron e- is moved toward the anode 310 via the electrolyte film 320, thereby generating an electricity, heat and water. The electricity generated from the stack unit 300 is converted into the alternating current (AC) by the power converter 400 to thus operate electrical products.

The water contained in the water tank 500 flows into the stack unit 300 via the connection line 600 disposed between the stack unit 300 and the water tank 500 to be heated by the heat generated from the stack unit 300. The heated water is discharged out of the stack unit 300. The discharged water is in contact with the radiating plates 430 via the divergence pipe 700 and then is heated into a higher temperature, to thereafter flow into the water tank 500. Such processes are repeatedly performed so as to enable the heating of the water contained in the water tank more fast. In addition, the radiating plates 430 can be cooled more fast without using a separate radiating fan as compared to the air cooling method used in the related art fuel cell.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell having a water type radiating device comprising:
a fuel supply unit for supplying a certain rate of fuel;
a reformer for generating a hydrogen containing gas containing a hydrogen gas by receiving the fuel from the fuel supply unit;
a stack unit for generating an electricity and heat according to an electrochemical reaction between the hydrogen containing gas generated from the reformer and oxygen separately supplied;
a water tank connected to one side of the stack unit for heating water contained therein by use of the heat generated from the stack unit;
a power converter connected to one side of the stack unit for converting the electricity generated from the stack unit into an alternating current and having a plurality of radiating plates; and
a forcible radiating unit for forcibly cooling the radiating plates and for heating the water contained in the water tank.

2. The fuel cell of claim 1, wherein the forcible radiating unit refers to a divergence pipe which is diverged from a connection line for connecting the stack unit with the water tank, and then merged with the connection line via the radiating plates in order to be in contact with the radiating plate.

3. The fuel cell of claim 2, wherein the divergence pipe is passed through the radiating plates in a manner of a zigzag shape.

4. The fuel cell of claim 3, wherein a plurality of insertion holes are formed in one side of the radiating plates so as to increase a contact area between the radiating plates and the divergence pipe, and thus the divergence pipe is inserted into the plurality of insertion holes.

5. A fuel cell having a water type radiating device comprising:
a fuel supply unit for supplying a certain rate of fuel;
a reformer for generating a hydrogen containing gas containing a hydrogen gas by receiving the fuel from the fuel supply unit;
a stack unit for generating an electricity and heat according to an electrochemical reaction between the hydrogen containing gas generated from the reformer and oxygen separately supplied;
a water tank connected to one side of the stack unit;
a power converter connected to one side of the stack unit for converting the electricity generated from the stack unit into an alternating current and having a plurality of radiating plates; and
a divergence pipe diverged from a connection line for connecting the stack unit with the water tank, and then merged with the connection line via the radiating plates in a manner of a zigzag shape.
